# EUROPEAN PATENT SPECIFICATION

(11) **EP 0 578 106 B1**
(45) Date of publication and mention of the grant of the patent: **23.12.1998**
(21) Application number: 93110349.3
(22) Date of filing: 29.06.1993
(51) Int. Cl.: B29C 35/02

(54) **Method and curing mold for manufacturing road vehicle tires**
Verfahren und Vulkanisierform zur Herstellung von Strassenfahrzeugreifen
Méthode et moule à vulcaniser pour fabriquer un pneumatique de véhicule routier

(30) Priority: 01.07.1992 IT TO920553
(43) Date of publication of application: 12.01.1994
(73) Proprietor: BRIDGESTONE CORPORATION, Tokyo 104-0031 (JP)
(72) Inventor: Siegenthaler, Karl J., I-00100 Roma, Ostia (IT)
(74) Representative: Jorio, Paolo, Dr. Ing.

(56) References cited:
- EP-A- 0 246 495
- DE-A- 2 900 717
- GB-A- 2 120 967

## Description

The present invention relates to a road vehicle tire manufacturing method.

In particular, the present invention relates to a road vehicle tire manufacturing method, the tire having two bead portions fitted to respective annular supports defining an inner peripheral portion of an annular forming mold for said tire; the method comprising providing said forming mold with an inner annular curing bladder to define a curing mold; fitting and gripping said curing mold between two opposite portions of a curing unit; and removing the tire from the curing unit and the forming mold upon completion of the curing process.

EP-A-0 540 049, relates to a road vehicle tire manufacturing process whereby a green tire is assembled inside an annular forming mold having a toroidal inner chamber negatively reproducing the surface of the finished tire.

According to the above patent, the forming mold is fitted and gripped between two opposite portions of a curing unit of the type disclosed in EP-A-0 467 314 and having a curing bladder, which is inserted inside the tire and mold, and defines part of a heat exchange gas circuit. At the end of the curing stage, the curing unit is opened, the bladder removed from the tire, and the tire unloaded off the curing unit together with the forming mold inside which the tire is housed pending completion of the post-inflation stage.

Obviously, for producing tires of different sizes, the curing unit must be opened, allowed to cool for changing the bladder, and then reheated to the required temperature prior to commencing the next production cycle, thus resulting in considerable downtime and energy consumption.

It is an object of the present invention to provide a road vehicle tire manufacturing method designed to substantially eliminate the aforementioned drawback.

More specifically, it is an object of the present invention to provide a method enabling size changes to be effected with a relatively negligible loss of time and with no need for cooling the curing unit.

According to the present invention, there is provided a road vehicle tire manufacturing method, the tire having two bead portions fitted to respective annular supports defining an inner peripheral portion of an annular forming mold for said tire; the method comprising:
- providing said forming mold with an inner annular curing bladder to define a curing mold; said curing bladder forming part of a bladder module, and being mounted on said forming mold by inserting the bladder module inside said forming mold through said annular supports and by fitting the bladder module to said two annular supports; and the bladder module comprising, further to said curing bladder, a tubular inner frame supporting the curing bladder and fittable in sliding manner to said inner annular supports;
- fitting and gripping said curing mold between two opposite portions of a curing unit; and
- removing the tire together with the curing mold from the curing unit upon completion of the curing process.

According to a preferred embodiment of the method set forth above, the module is inserted through said annular supports during the formation of said tire.

The present invention also relates to a curing unit for manufacturing tires.

According to the present invention, there is provided a curing mold for manufacturing road vehicle tires, said curing unit being adapted to be fitted and gripped between two opposite portions of a curing unit, and comprising an annular forming mold including an inner curing bladder and having a peripheral inner annular portion defined by two inner annular supports for respective bead portions of a tire housed, in use, inside the forming mold; characterized by the fact that the curing bladder forms part of a bladder module further comprising a tubular inner frame supporting the curing bladder and fitted in sliding manner to said inner annular supports.

The present invention will now be described by way of example with reference to the accompanying drawings, in which:
Fig.s 1 to 4 show schematic views of successive stages in the method according to the present invention;

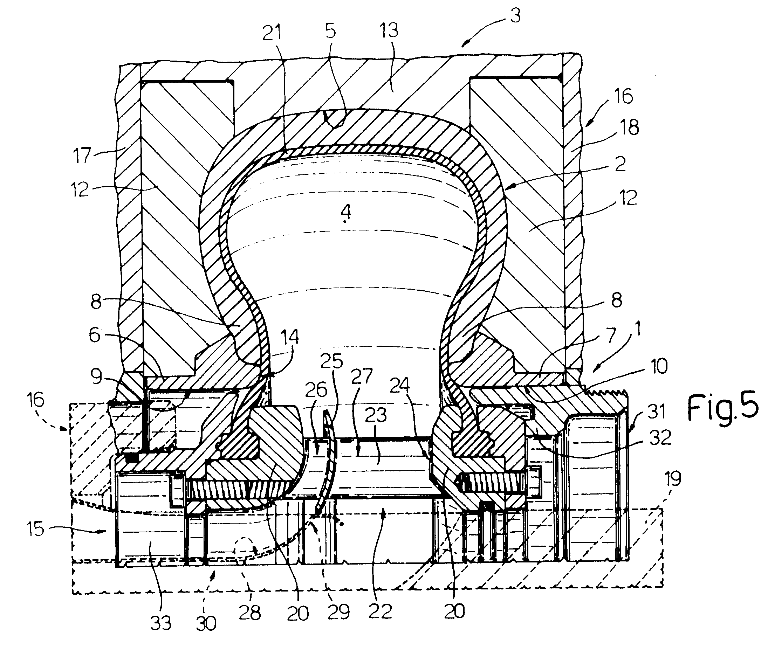

Fig.5 shows an axial half section of a preferred embodiment of the curing mold according to the present invention.

Number 1 in Fig.s 3 and 5 indicates a curing mold for housing a tire 2 during part of its formation, as well as during curing and postinflation.

Curing mold 1 comprises a forming mold 3 having a toroidal inner chamber 4 inside which tire 2 is formed in known manner with its outer surface contacting a surface 5 of chamber 4 negatively reproducing the shape of tire 2.

More specifically, mold 3 comprises a first and second inner annular support 6 and 7 supporting respective bead portions 8 of tire 2. Annular supports 6 and 7 are defined internally by respective cylindrical surfaces 9 and 10 coaxial with axis 11, and are connected releasably to the inner edge of respective annular plates 12, the outer edges of which are connected releasably to respective axial ends of an outer annular body 13. Together with annular plates 12 and annular supports 6 and 7, annular body 13 defines toroidal chamber 4, which is accessible through an annular opening 14 defined between annular supports 6 and 7 and extending about axis 11.

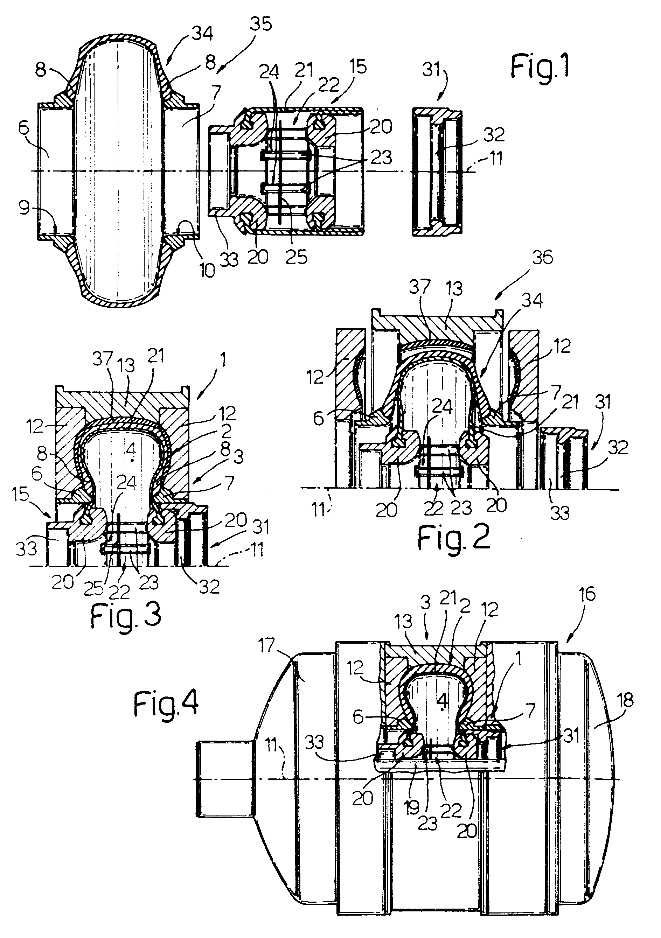

In addition to mold 3, curing mold 1 also comprises a bladder module 15, which, as explained in more detail later on, is fitted to annular supports 6 and 7 during the formation of tire 2 and prior to fitting mold 1 to a known curing unit 16 comprising, as shown in Fig.4, a first and second opposed portion 17 and 18 for gripping mold 1. More specifically, portion 17 presents an axial core 19 projecting from portion 17 towards portion 18 and designed to engage mold 1 and portion 18 in sliding manner.

As shown more clearly in Fig.5, module 15 is substantially tubular, and comprises two annular clamping elements 20 located inwards of respective surfaces 9 and 10 and engaging the opposite annular beads of a curing bladder 21 extending, in use, through opening 14 and inside toroidal chamber 4. Module 15 also comprises a tubular inner frame 22 fitted at opposite ends with annular elements 20 and defined by a number of axial rods 23 connecting annular elements 20. Rods 23 also define a number of axial openings 24 facing annular opening 14 and each divided by a transverse wall 25 into two openings 26 and 27.

As shown in Fig.5, when mold 1 is fitted in the curing position to core 19, openings 26 and 27 respectively connect chamber 4, through opening 14, to the supply and return conduits 28 and 29 of a forced-circulation circuit 30 formed at least partially in known manner on core 19, for forcing heat exchange fluid inside bladder 21.

At one end, module 15 is centered in relation to mold 3 by an auxiliary ring 31 fitted between surface 10 and respective annular element 20 and having an inner annular rib 32 cooperating axially with annular element 20, for preventing withdrawal of module 15 from mold 3 through annular support 7. On the opposite end to that fitted to ring 31, frame 22 presents an annular appendix 33 for centering module 15 in fluidtight manner on to portion 17 of unit 16.

As shown in Fig.1, carcass 34 of tire 2 is set up in assembly station 35 featuring a number of modules 15 of different sizes, only one of which is shown for the sake of simplicity. Carcass 34 presents bead portions 8 already fitted to annular supports 6 and 7, and may be either unformed or already partially formed as shown in Fig.1.

In station 35, the appropriate module 15 is fitted inside carcass 34 through annular support 7, the inner surface 10 of which is larger in diameter than the outside diameter of elements 20, for enabling bladder 21 to be fitted through annular support 7.

As shown in Fig.2, bladder 21 and carcass 34 are then formed together at a second station 36, where carcass 34 is inserted inside a tread assembly 37 fitted to outer annular body 13, so as to form tire 2, which is closed between annular plates 12 which, by connecting annular supports 6 and 7 and annular body 13, simultaneously define forming mold 3 and curing mold 1.

As shown in Fig.4, mold 1 is fitted to core 19, and bladder 21, inserted inside tire 2 through opening 14, preferably by feeding pressurized fluid in known manner inside bladder 21, closes circuit 30 inside tire 2.

Once tire 2 is cured in known manner, unit 16 is opened, and mold 1, still housing cured tire 2 engaged by bladder 21, is unloaded off core 19 and fed to a post-inflation station (not shown), while core 19 is fitted with a further mold 1 housing a further tire 2, not necessarily the same as cured tire 2.

Consequently, by virtue of bladder 21 not being integral with core 19 but forming part of module 15, and by virtue of module 15 being fitted to tire 2 off unit 16, the size changeover time, in itself negligible, has absolutely no effect on the operating cycle of unit 16, thus enabling unit 16 to be maintained at the required temperature, and, if necessary, a change in size from one tire to the next.

## Claims

1. A road vehicle tire manufacturing method, the tire having two bead portions (8) fitted to respective annular supports (6, 7) defining an inner peripheral portion of an annular forming mold (3) for said tire (2); the method comprising:
- providing said forming mold (3) with an inner annular curing bladder (21) to define a curing mold (1); said curing bladder (21) forming part of a bladder module (15), and being mounted on said forming mold (3) by inserting the bladder module (15) inside said forming mold (3) through said annular supports (6, 7) and by fitting the bladder module (15) to said two annular supports (6, 7); and the bladder module (15) comprising, further to said curing bladder (21), a tubular inner frame (22) supporting the curing bladder (21) and fittable in sliding manner to said inner annular supports (6, 7);
- fitting and gripping said curing mold (1) between two opposite portions (17, 18) of a curing unit (16); and
- removing the tire (2) together with the curing mold (1) from the curing unit (16) upon completion of the curing process.

2. A method as claimed in Claim 1, characterized by the fact that the module (15) is inserted through said annular supports (6, 7) during the formation of said tire (2).

3. A method as claimed in Claim 1 or 2, characterized by the fact that said module (15) is selected from a number of modules (15) of different sizes.

4. A curing mold (1) for manufacturing road vehicle tires (2), said curing unit (1) being adapted to be fitted and gripped between two opposite portions (17, 18) of a curing unit (16), and comprising an annular forming mold (3) including an inner curing bladder (21) and having a peripheral inner annular portion defined by two inner annular supports (6, 7) for respective bead portions (8) of a tire (2) housed, in use, inside the forming mold (3); characterized by the fact that the curing bladder (21) forms part of a bladder module (15) further comprising a tubular inner frame (22) supporting the curing bladder (21) and fitted in sliding manner to said inner annular supports (6, 7).

5. A curing mold (1) as claimed in Claim 4, characterized by the fact that said forming mold (3) comprises an outer annular body (13), said two annular supports (6, 7), and two lateral annular plates (12) connecting respective said inner annular supports (6, 7) to said outer annular body (13); said annular plates (12) defining, together with said inner annular supports (6, 7) and said outer annular body (13), a toroidal chamber (4) for housing said tire (2).

6. A curing mold (1) as claimed in Claim 5, characterized by the fact that said two inner annular supports (6, 7) define an annular opening (14) enabling external communication of said toroidal chamber (4) and the passage of said curing bladder (21) inside said tire (2).

7. A curing mold (1) as claimed in any one of the foregoing Claims from 4 to 6, characterized by the fact that said module (15) comprises two annular clamping elements (20) fitted to opposite axial ends of said curing bladder (21); said annular clamping elements (20) being integral with the opposite axial ends of said tubular frame (22), and being located substantially inwards of respective said inner annular supports (6, 7).

8. A curing mold (1) as claimed in Claim 7, characterized by the fact that said frame (22) comprises a number of parallel rods (23); each pair of adjacent rods (23) defining an axial opening (24) extending between said two annular clamping elements (20) and enabling external communication of said curing bladder (21).

9. A curing mold (1) as claimed in Claim 8, characterized by the fact that said tubular frame (22) comprises a transverse wall (25) dividing each said axial opening (24) into a first (26) and second (27) portion.

10. A curing mold (1) as claimed in any one of the foregoing Claims from 7 to 9, characterized by the fact that each annular clamping element (20) presents an outside diameter smaller than the inside diameter of the respective said inner annular support (6, 7); an auxiliary lock ring (31) being provided between one said annular clamping element (20) and the respective said inner annular support (6, 7).

## Patentansprüche

1. Straßenfahrzeugreifen-Herstellungsverfahren, wobei der Reifen zwei Wulstteile (8) hat, die an jeweiligen ringförmigen Haltern (6, 7) angebracht werden, welche einen inneren Umfangsteil einer ringförmigen Formungs- bzw. Bildungsform (3) für den Reifen (2) definieren bzw. begrenzen; wobei das Verfahren folgendes umfaßt:
- Versehen der Formungs- bzw. Bildungsform (3) mit einer inneren ringförmigen Härtungsblase (21) zum Definieren bzw. Bilden einer Härtungsform (1); wobei die Härtungsblase (21) einen Teil eines Blasenmoduls (15) bildet und auf bzw. in der Formungs- bzw. Bildungsform (3) mittels Einfügen des Blasenmoduls (15) in das Innere der Formungs- bzw. Bildungsform (3) durch die ringförmigen Halter (6, 7) und durch Anbringen des Blasenmoduls (15) an den beiden ringförmigen Haltern (6, 7) eingebaut bzw. befestigt wird; und wobei das Blasenmodul (15) außer der Härtungsblase (21) einen rohrförmigen inneren Rahmen (22) umfaßt, welcher die Härtungsblase (21) hält bzw. trägt und in gleitender bzw. verschiebbarer Art und Weise an bzw. in den inneren ringförmigen Haltern (6, 7) anbringbar ist;
- Einfügen und Festmachen der Härtungsform (1) zwischen zwei gegenüberliegenden Teilen (17, 18) einer Härtungseinheit (16); und
- Entfernen des Reifens (2) zusammen mit der Härtungsform (1) von der Härtungseinheit (16) nach Vollendung des Härtungsvorgangs.

2. Verfahren nach Anspruch 1, **gekennzeichnet** durch die Tatsache, daß das Modul (15) während der Bildung des Reifens (2) durch die ringförmigen Halter (6, 7) eingefügt wird.

3. Verfahren nach Anspruch 1 oder 2, **gekennzeichnet** durch die Tatsache, daß das Modul (15) aus einer Anzahl von Modulen (15) von unterschiedlichen Größen ausgewählt wird.

4. Härtungsform (1) für das Herstellen von Straßenfahrzeugreifen (2), wobei die Härtungseinheit (1) dazu geeignet bzw. angepaßt ist, zwischen zwei gegenüberliegenden Teilen (17, 18) einer Härtungseinheit (16) angebracht und festgemacht zu werden, und umfassend eine ringförmige Formungs- bzw. Bildungsform (3), die eine innere Härtungsblase (21) aufweist und einen inneren ringförmigen Umfangsteil hat, der durch zwei innere ringförmige Halter (6, 7) für jeweilige Wulstteile (8) eines Reifens (2), welcher im Gebrauch innerhalb der Formungs- bzw. Bildungsform (3) untergebracht ist, definiert bzw. gebildet ist; **gekennzeichnet** durch die Tatsache, daß die Härtungsblase (21) einen Teil eines Blasenmoduls (15) bildet, das weiter einen rohrförmigen inneren Rahmen (22) umfaßt, welcher die Härtungsblase (21) hält bzw. trägt und in gleitender bzw. verschiebbarer Art und Weise an bzw. in den inneren ringförmigen Haltern (6, 7) angebracht ist.

5. Härtungsform (1) nach Anspruch 4, **gekennzeichnet** durch die Tatsache, daß die Formungs- bzw. Bildungsform (3) einen äußeren ringförmigen Körper (13), die beiden ringförmigen Halter (6, 7) und zwei seitliche ringförmige Platten (12), welche jeweils die inneren ringförmigen Halter (6, 7) mit dem äußeren ringförmigen Körper (13) verbinden, umfaßt; wobei die ringförmigen Platten (12) zusammen mit den inneren ringförmigen Haltern (6, 7) und dem äußeren ringförmigen Körper (13) eine toroidale Kammer (4) für die Aufnahme des Reifens (2) begrenzen.

6. Härtungsform (1) nach Anspruch 5, **gekennzeichnet** durch die Tatsache, daß die beiden inneren ringförmigen Halter (6, 7) eine ringförmige Öffnung (14) definieren bzw. begrenzen, welche eine externe Verbindung der toroidalen Kammer (4) und der Passage der Härtungsblase (21) innerhalb des Reifens (2) ermöglicht.

7. Härtungsform (1) nach irgendeinem der vorhergehenden Ansprüche von 4 bis 6, **gekennzeichnet** durch die Tatsache, daß das Modul (15) zwei ringsförmige Befestigungs- bzw. Klemmelemente (20) umfaßt, die an entgegengesetzten axialen Enden der Härtungsblase (21) angebracht sind; wobei die ringförmigen Befestigungs- bzw. Klemmelemente (20) integral mit den entgegengesetzten axialen Enden des rohrförmigen Rahmens (22) sind und im wesentlichen einwärts von einem jeweiligen der inneren ringförmigen Halter (6, 7) lokalisiert sind.

8. Härtungsform (1) nach Anspruch 7, **gekennzeichnet** durch die Tatsache, daß der Rahmen (22) eine Anzahl von parallelen Stäben (23) umfaßt; wobei jedes Paar von benachbarten Stäben (23) eine axiale Öffnung (24) begrenzt, die sich zwischen den beiden ringförmigen Befestigungs- bzw. Klemmelementen (20) erstreckt und eine externe Verbindung der Härtungsblase (21) ermöglicht.

9. Härtungsform (1) nach Anspruch 8, **gekennzeichnet** durch die Tatsache, daß der rohrförmige Rahmen (22) eine Querwand (25) umfaßt, die jede genannte axiale Öffnung (24) in einen ersten (26) und zweiten (27) Teil unterteilt.

10. Härtungsform (1) nach irgendeinem der vorhergehenden Ansprüche von 7 bis 9, **gekennzeichnet** durch die Tatsache, daß jedes ringförmige Befestigungs- bzw. Klemmelement (20) einen Außendurchmesser aufweist, der kleiner als der Innendurchmesser des jeweiligen inneren ringförmigen Halters (6, 7) ist; wobei ein Hilfsarretierungsring (31) zwischen dem einen ringförmigen Befestigungs- bzw. Klemmelement (20) und dem entsprechenden inneren ringförmigen Halter (6, 7) vorgesehen ist.

## Revendications

1. Procédé de fabrication d'un pneumatique de véhicule sur route, le pneumatique ayant deux parties de talon (8) placées sur des supports annulaires respectifs (6, 7) délimitant une partie périphérique intérieure d'un moule annulaire (3) de formage dudit pneumatique (2) ; le procédé comprenant :
- l'équipement dudit moule de formage (3) d'une vessie annulaire interne de vulcanisation (21) de manière à constituer un moule de vulcanisation (1) ; ladite vessie de vulcanisation (21) faisant partie d'un module de vessie (15) et étant montée sur ledit moule de formage (3) par introduction du module de vessie (15) à l'intérieur dudit moule de formage (3) entre lesdits supports annulaires (6, 7) et par montage du module de vessie (15) sur lesdits deux supports annulaires (6, 7) ; et le module de vessie (15) comprenant, en plus de ladite vessie de vulcanisation (21), une structure tubulaire intérieure (22) supportant la vessie de vulcanisation (21) et se montant de manière coulissante sur lesdits supports annulaires intérieurs (6, 7) ;
- le montage et le serrage dudit moule de vulcanisation (1) entre deux parties opposées (17, 18) d'un ensemble de vulcanisation (16) ; et
- l'enlèvement du pneumatique (2) avec le moule de vulcanisation (1) de l'ensemble de vulcanisation (16) à l'achèvement du processus de vulcanisation.

2. Procédé selon la revendication 1, caractérisé par le fait que le module (15) s'introduit entre lesdits supports annulaires (6, 7) pendant la formation dudit pneumatique (2).

3. Procédé selon la revendication 1 ou 2, caractérisé par le fait que ledit module (15) est choisi parmi plusieurs modules (15) de dimensions différentes.

4. Moule de vulcanisation (1) pour la fabrication de pneumatiques (2) de véhicules sur route, ledit ensemble de vulcanisation (1) étant destiné à être monté et serré entre deux parties opposées (17, 18) d'un ensemble de vulcanisation (16) et comprenant un moule annulaire de formage (3) comprenant une vessie intérieure de vulcanisation (21) et ayant une partie annulaire intérieure périphérique délimitée par deux supports annulaires intérieurs (6, 7) pour des parties respectives de talon (8) d'un pneumatique (2) qui sont logées, à l'utilisation, à l'intérieur du moule de formage (3) ; caractérisé par le fait que la vessie de vulcanisation (21) fait partie d'un module de vessie (15) comprenant par ailleurs une structure intérieure tubulaire (22) supportant la vessie de vulcanisation (21) et montée de manière coulissante sur lesdits supports annulaires intérieurs (6, 7).

5. Moule de vulcanisation (1) selon la revendication 4, caractérisé par le fait que ledit moule de formage (3) comprend un corps annulaire extérieur (13), lesdits deux supports annulaires (6, 7) et deux plaques annulaires latérales (12) reliant lesdits supports annulaires intérieurs respectifs (6, 7) audit corps annulaire extérieur (13) ; lesdites plaques annulaires (12) délimitant, avec lesdits supports annulaires intérieurs (6, 7) et ledit corps annulaire extérieur (13), une chambre toroïdale (4) de logement dudit pneumatique (2).

6. Moule de vulcanisation (1) selon la revendication 5, caractérisé par le fait que lesdits deux supports annulaires intérieurs (6, 7) délimitent une ouverture annulaire (14) permettant la communication avec l'extérieur de ladite chambre toroïdale (4) et le passage de ladite vessie de vulcanisation (21) à l'intérieur dudit pneumatique (2).

7. Moule de vulcanisation (1) selon l'une quelconque des revendications précédentes 4 à 6, caractérisé par le fait que ledit module (15) comprend deux éléments annulaires de serrage (20) disposés aux extrémités axiales opposées de ladite vessie de vulcanisation (21) ; lesdits éléments annulaires de serrage (20) étant monobloc avec les extrémités axiales opposées de ladite structure tubulaire (22) et étant placés sensiblement à l'intérieur desdits supports annulaires intérieurs respectifs (6, 7).

8. Moule de vulcanisation (1) selon la revendication 7, caractérisé par le fait que ladite structure (22) comprend plusieurs tiges parallèles (23) ; chaque paire de tiges voisines (23) délimitant une ouverture axiale (24) située entre lesdits deux éléments annulaires de serrage (20) et permettant la communication extérieure de ladite vessie de vulcanisation (21).

9. Moule de vulcanisation (1) selon la revendication 8, caractérisé par le fait que ladite structure tubulaire (22) comprend une paroi transversale (25) divisant chacune desdites ouvertures axiales (24) en une première (26) et une deuxième (27) parties.

10. Moule de vulcanisation (1) selon l'une quelconque des revendications précédentes 7 à 9, caractérisé par le fait que chaque élément annulaire de serrage (20) présente un diamètre extérieur plus petit que le diamètre intérieur dudit support annulaire intérieur respectif (6, 7) ; un anneau auxiliaire de blocage (21) étant placé entre un dit élément annulaire de serrage (20) et ledit support annulaire intérieur respectif (6, 7).
